# EUROPÄISCHE PATENTANMELDUNG

(11) **EP 4 550 540 A1**
(43) Veröffentlichungstag der Anmeldung: **07.05.2025**
(21) Anmeldenummer: 23207758.6
(22) Anmeldetag: 03.11.2023
(51) Int. Cl.: H01M 50/213, H01M 50/249, H01M 50/284, H01M 50/291, H01M 50/519

(54) **BATTERIE MIT EINEM GEHÄUSE UND DARIN ANGEORDNETEN ENERGIESPEICHERELEMENTEN**

(71) Anmelder: VARTA Microbattery GmbH, 73479 Ellwangen Jagst (DE)
(72) Erfinder: Deschler, Markus, 86643 Rennertshofen (DE); Faass, Andreas, 86756 Reimlingen (DE); Rauwolf, Andreas, 86742 Fremdingen (DE); Wiedeman, Tristan, 86199 Augsburg (DE)
(74) Vertreter: Ostertag & Partner Patentanwälte mbB

(57) **Zusammenfassung**

Es wird eine Batterie (100) mit einem Gehäuse (110, 120) und einer Mehrzahl darin angeordneter, wiederaufladbarer elektrochemischer Energiespeicherelemente (200) mit jeweils einem positiven Pol und einem negativen Pol vorgeschlagen. Die Batterie zeichnet sich dadurch aus, dass die elektrochemischen Energiespeicherelemente (200) jeweils eine Längsachse sowie einen ersten endständigen Bereich und einen zweiten endständigen Bereich aufweisen, wobei die elektrochemischen Energiespeicherelemente (200) mit paralleler Ausrichtung ihrer jeweiligen Längsachsen nebeneinander angeordnet sind. Die Batterie (100) umfasst einen zweiteiligen Zellhalter mit einem ersten Zellhalterrahmen (10) und einem zweiten Zellhalterrahmen (20). Der erste Zellhalterrahmen (10) fixiert die elektrochemischen Energiespeicherelemente (200) in deren ersten endständigen Bereichen und der zweite Zellhalterrahmen (20) fixiert die elektrochemischen Energiespeicherelemente in deren zweiten endständigen Bereichen. Die Batterie ist weiter dadurch gekennzeichnet, dass alle positiven und negativen Pole der elektrochemischen Energiespeicherelemente (200) in deren ersten endständigen Bereichen mit mindestens einem weiteren Element (300) der Batterie elektrisch kontaktiert sind. Weiterhin sind der erste Zellhalterrahmen (10) und der zweite Zellhalterrahmen (20) lösbar miteinander verbunden. Insgesamt erlaubt die vorgeschlagene Batterie eine besonders einfach durchzuführende Austauschbarkeit einzelner, gegebenenfalls defekter elektrochemischer Energiespeicherelemente.

## Beschreibung

Die vorliegende Erfindung betrifft eine Batterie mit einem Gehäuse und einer Mehrzahl darin angeordneter, wiederaufladbarer elektrochemischer Energiespeicherelemente. Weiterhin betrifft die Erfindung einen zweiteiligen Zellhalter für eine solche Batterie. Die Batterie eignet sich insbesondere zur Stromversorgung eines elektrischen Fahrrads.

### ANWENDUNGSGEBIET UND STAND DER TECHNIK

Fahrräder mit elektromotorischer Unterstützung sind weit verbreitet. Dabei dient der Elektromotor vor allem als Anfahrhilfe und zur Unterstützung der Kurbelbewegung. Es ist aber auch eine vollständige Übernahme des Antriebs durch den Elektromotor möglich. Für die Energieversorgung des Elektromotors wird in der Regel eine Batterie (im Folgenden Fahrradbatterie) verwendet, die eine Mehrzahl von wiederaufladbaren (sekundären) elektrochemischen Energiespeicherelementen, beispielsweise Lithium-Ionen-Zellen, umfasst. Innerhalb der Batterie sind die einzelnen Energiespeicherelemente in der Regel elektrisch miteinander verschaltet. Solche wiederaufladbaren Batterien werden auch als Akkumulatoren bezeichnet.

Für die Aufladung von Fahrradbatterien werden in der Regel Ladegeräte verwendet, die an einen Haushalts-Stromnetzanschluss angeschlossen werden können. Fahrradbatterien sind meistens als Wechsel-Batterien ausgebildet, die mit geeigneten Steckverbindungen sowohl am Fahrrad als auch an dem Ladegerät mit wenigen Handgriffen angeschlossen werden können.

Fahrradbatterien bzw. Akkumulatoren für Fahrräder umfassen oftmals ein längliches Gehäuse, in welchem die Energiespeicherelemente enthalten sind. Der zur elektrischen Kontaktierung der Batterie notwendige Stecker wird üblicherweise bei der Batteriefertigung in eine Endkappe des Gehäuses eingesetzt.

Üblicherweise sind Batterien bzw. Akkumulatoren für Fahrräder so aufgebaut, dass sie eine Mehrzahl von Energiespeicherelementen eines Typs enthalten, die je nach Anforderung seriell und/oder parallel miteinander elektrisch verschaltet sind, um die gewünschte elektrische *Performance* (Leistung, Kapazität) zu realisieren.

Innerhalb des Gehäuses einer Batterie bzw. eines Akkumulators werden die einzelnen Zellen üblicherweise mittels eines Zellhalters gehalten, der oftmals aus Kunststoff gefertigt ist und entsprechende Aufnahmen für die einzelnen Zellen bzw. Energiespeicherelemente aufweist.

Derartige Zellhalter sind beispielsweise auch aus dem Bereich der Energiespeicher für Kraftfahrzeuge bekannt. So zeigt beispielsweise die DE 10 2021 106 470 A1 einen Zellhalter für einen elektrischen Energiespeicher eines Kraftfahrzeugs, bei dem zwei rahmenartige Elemente des Zellhalters die einzelnen Speicherzellen, die als zylindrische Rundzellen ausgebildet sind, jeweils von oben und von unten umgreifen.

Die WO 2021/254941 A1 hat ein Batteriemodul mit Luftkühlung zum Gegenstand. Das Batteriemodul ist aus mindestens zwei Batterieblöcken aufgebaut, wobei jeder Batterieblock eine Mehrzahl von zylindrischen Rundzellen umfasst, die von einem Zellhalter mit entsprechenden Aufnahmen für die Rundzellen gehalten werden. Der Zellhalter ist zweiteilig ausgebildet und umgreift die jeweiligen Stirnseiten der aufrechtstehend, parallel nebeneinander angeordneten Rundzellen nach Art eines Rahmens von oben und von unten.

Die WO 2014/203089 A1 beschreibt eine Batterie mit mehreren wiederaufladbaren Zellen in einer Matrix. Diese Batterie weist eine Verbindungsplatine in Form einer Leiterplatte mit Leiterbahnen auf, wobei die Pole der Zellen über verschweißte Kabel, Drähte oder Streifen mit den Leiterbahnen verbunden sind.

Die aktuelle EU-Gesetzgebung schreibt für LMT-Batterien (LMT - *light means of transport*) vor, dass bei einem Defekt einer einzelnen Zelle bzw. einem einzelnen Energiespeicherelement der Batterie die einzelne Zelle austauschbar sein muss. Dies ist bei herkömmlichen Batterien dieser Art vor dem Hintergrund der komplexen Fixierung und Verschaltung der einzelnen Zellen innerhalb der Batterie nicht unproblematisch. Zum Austausch einer einzelnen Zelle muss nach dem Öffnen des Gehäuses der Batterie zum einen die elektrische Verschaltung der einzelnen Zelle innerhalb der Batterie und zum anderen deren mechanische Fixierung, die im Allgemeinen durch eine umfassende Verklebung der Zelle mit Gehäuse- oder Zellhalterelementen realisiert ist, gelöst werden, bevor ein Austausch vorgenommen werden kann. Darüber hinaus ist im Allgemeinen auch die Integration einer neuen Zelle in den elektrischen Zellverbund und in den mechanischen Aufbau der Batterie schwierig und aufwendig.

Herkömmlicherweise ist der Aufbau einer Batterie in der Regel so realisiert, dass die Energiespeicherelemente (Zellen) an ihren beiden Stirnseiten mit Zellverbindern, beispielsweise in Form von Metallstreifen, wechselseitig verschweißt sind, wobei in der Regel mehrere Zellen gemeinsam angeschweißt sind. Zusätzlich werden die Zellen und der Zellhalter in der Regel komplett auf beiden Stirnseiten verklebt oder vergossen, beispielsweise mit einem Harz. Darüber hinaus kann es auch vorgesehen sein, dass die einzelnen Zellen axial stockwerkweise angeordnet sind.

Diese herkömmlichen Bauformen einer Batterie erschweren den Austausch einzelner Zellen sehr oder machen ihn völlig unmöglich. Insbesondere ist das Ablösen einer einzelnen Zelle von dem Zellverbinder in der Regel nicht möglich, da die Zellen in der Regel auch direkt miteinander verbunden sind. Daher muss für einen Austausch einer einzelnen Zelle der gesamte Zellverbund vom Zellverbinder getrennt werden und der gesamte Zellverbund einschließlich der ersetzten Einzelzelle später komplett neu verschweißt werden. Die erwähnte Stockwerkanordnung der Zellen hat darüber hinaus den Nachteil, dass eine Zelle in der Mitte der Stockwerkanordnung in der Regel gar nicht für einen Austausch erreichbar ist, ohne die gesamte Anordnung zu zerstören.

### AUFGABE UND LÖSUNG

Vor diesem Hintergrund stellt sich die Erfindung die Aufgabe, eine Batterie mit wiederaufladbaren elektrochemischen Energiespeicherelementen bereitzustellen, die alle Anforderungen an einen kompakten Aufbau für eine Batterie, insbesondere für einen Fahrradakkumulator, erfüllt und gleichzeitig mit wenig Aufwand und in einfach zu realisierender Weise einen Austausch von einzelnen, gegebenenfalls defekten Energiespeicherelementen der Batterie erlaubt.

Diese Aufgabe wird durch eine Batterie gelöst, wie sie sich aus dem Anspruch 1 ergibt. Vorteilhafte Ausgestaltungen der Batterie sind Gegenstand der von Anspruch 1 abhängigen Ansprüche. Die Aufgabe wird weiterhin durch einen zweiteiligen Zellhalter für eine solche Batterie gelöst, wie er sich aus dem weiteren nebengeordneten Anspruch und, in bevorzugten Ausgestaltungen, aus den von diesem Anspruch abhängigen Ansprüchen ergibt.

Die erfindungsgemäße Batterie umfasst ein Gehäuse mit einer Mehrzahl darin angeordneter, wiederaufladbarer elektrochemischer Energiespeicherelemente. Die einzelnen elektrochemischen Energiespeicherelemente weisen jeweils einen positiven Pol und einen negativen Pol auf. Weiterhin zeichnet sich die erfindungsgemäße Batterie durch die folgenden Merkmale aus:
a. Die elektrochemischen Energiespeicherelemente weisen jeweils eine Längsachse sowie einen ersten endständigen Bereich und zweiten endständigen Bereich auf, und
b. die elektrochemischen Energiespeicherelemente sind mit paralleler Ausrichtung ihrer jeweiligen Längsachsen nebeneinander angeordnet, und
c. die Batterie umfasst einen zweiteiligen Zellhalter mit einem ersten Zellhalterrahmen und einem zweiten Zellhalterrahmen, und
d. der erste Zellhalterrahmen fixiert die elektrochemischen Energiespeicherelemente in deren ersten endständigen Bereichen und der zweite Zellhalterrahmen fixiert die elektrochemischen Energiespeicherelemente in deren zweiten endständigen Bereichen.

### Erfindungsgemäß ist die Batterie weiterhin dadurch gekennzeichnet, dass

e. alle positiven und negativen Pole der elektrochemischen Energiespeicherelemente insbesondere ausschließlich in deren ersten endständigen Bereichen mit mindestens einem weiteren Element der Batterie elektrisch kontaktiert sind, und
f. der erste Zellhalterrahmen und der zweite Zellhalterrahmen lösbar miteinander verbunden sind.

Diese Merkmalskombination bei der erfindungsgemäßen Batterie hat den besonderen Vorteil, dass bei dieser Batterie in besonders einfacher Weise ein Austausch von einzelnen elektrochemischen Energiespeicherelementen (im Folgenden kurz: Energiespeicherelemente) möglich ist. Insbesondere können bei einem Defekt von einem oder gegebenenfalls mehreren einzelnen Energiespeicherelementen das oder die jeweiligen Energiespeicherelemente ohne größeren Aufwand einzeln entfernt und durch intakte Energiespeicherelemente ersetzt werden. Ein wichtiger Aspekt in diesem Zusammenhang ist, dass der erste und der zweite Zellhalterrahmen derart miteinander verbunden sind, dass die Verbindung zwischen den beiden Zellhalterrahmen lösbar ausgebildet ist. Unter einer solchen lösbaren Verbindung ist dabei eine Verbindung zu verstehen, die ohne Beschädigung oder Zerstörung der Bauteile getrennt und erneut fixiert werden kann.

Der erste endständige Bereich und der zweite endständige Bereich der Energiespeicherelemente liegen jeweils vorzugsweise orthogonal zu der Längsachse des jeweiligen Energiespeicherelements, wobei der erste endständige Bereich und der zweite endständige Bereich einander gegenüberliegen. Zylindrischen Rundzellen sind ein besonders bevorzugtes Beispiel für die elektrochemischen Energiespeicherelemente einer erfindungsgemäßen Batterie. Hier liegen der erste und der zweite endständige Bereich jeweils in den Bereichen der Stirnseiten der Rundzellen.

In bevorzugter Weise sind die einzelnen Energiespeicherelemente, die mit paralleler Ausrichtung ihrer jeweiligen Längsachsen nebeneinander angeordnet sind, ausschließlich in einer Ebene angeordnet. Das heißt, es sind vorzugsweise nicht mehrere Ebenen der nebeneinander angeordneten Energiespeicherelemente vorgesehen. Eine Anordnung in mehreren Ebenen hätte den Nachteil, dass nicht alle Energiespeicherelemente gleichermaßen für einen Austausch erreichbar wären. Daher ist es besonders bevorzugt, alle Energiespeicherelemente in einer Ebene anzuordnen, so dass jedes Energiespeicherelement im Hinblick auf einen gegebenenfalls erforderlichen Austausch gut erreichbar ist.

Der erste und der zweite Zellhalterrahmen sind vorzugsweise aus Kunststoff gefertigt. Kunststoff zeichnet sich durch sein leichtes Gewicht aus, was für ein möglichst geringes Gewicht der fertig montierten Batterie vorteilhaft ist.

Darüber hinaus können entsprechende Kunststoffteile in besonders vorteilhafter Weise als Spritzgussteile gefertigt werden, so dass eine einfache und kostengünstige Produktion möglich ist.

Zweckmäßigerweise sind der erste und der zweite Zellhalterrahmen mit Aufnahmebereichen bzw. Aufnahmen für die einzelnen Energiespeicherelemente ausgestattet, so dass die Energiespeicherelemente nebeneinander angeordnet und fixiert werden können. Im Fall von zylindrischen Rundzellen, die einen runden Querschnitt aufweisen, können beispielsweise runde Aufnahmen in den Zellhalterrahmen für die einzelnen Energiespeicherelemente vorgesehen sein.

Der erste und der zweite Zellhalterrahmen können beispielsweise eine rechteckförmige Grundform aufweisen, die insbesondere an eine bei Fahrradbatterien übliche rechteckförmige Quaderform angepasst ist.

In einer besonders bevorzugten und sehr vorteilhaften Ausbildung der erfindungsgemäßen Batterie im Hinblick auf die lösbare Verbindung der Zellhalterrahmen sind der erste Zellhalterrahmen und der zweite Zellhalterrahmen durch eine oder mehrere Schraubverbindungen lösbar miteinander verbunden. Derartige Schraubverbindungen können im Bedarfsfall in einfacher Weise gelöst werden, so dass der erste Zellhalterrahmen und der zweite Zellhalterrahmen voneinander getrennt werden können. Anschließend können ohne größeren Aufwand einzelne Energiespeicherelemente entnommen und ausgetauscht werden, bevor die Zellhalterrahmen wieder miteinander verbunden werden.

Vorzugsweise sind mehrere Schraubverbindungen für die Verbindung der Zellhalterrahmen vorgesehen. Wenn die Zellhalterrahmen beispielsweise eine rechteckige Grundform aufweisen, können die Schraubverbindungen in den jeweiligen Eckbereichen der Rechteckform vorgesehen sein. Zusätzlich können weitere Schraubverbindungen vorgesehen sein. Je nach Größe und Dimensionierung der jeweiligen Batterie können beispielsweise mehrere Schraubverbindungen über die Länge der Längsseiten der Zellhalterrahmen verteilt sein. Es ist besonders bevorzugt, wenn zwischen jeder der außenständigen Energiespeicherelemente eine Schraubverbindung zwischen den Zellhalterrahmen vorgesehen ist.

Für die Schraubverbindungen können prinzipiell selbstschneidende Schrauben verwendet werden. Oftmals ist es jedoch besonders bevorzugt, dass die Schraubverbindungen nicht durch selbstschneidende Schrauben, sondern mit einer Schraube und mit einem entsprechenden Gewinde ausgebildet sind. Dies führt bei einem gegebenenfalls erforderlichen Lösen und Wiederverbinden der Schraubverbindung zu einer im Allgemeinen stabileren erneuten Befestigung der Zellhalterrahmen aneinander.

Für die Schraubverbindungen sind vorzugsweise säulenförmige Verlängerungen bei den Zellhalterrahmen vorgesehen, die als Schraubkanäle oder Gewindehülsen ausgebildet sind. Die säulenförmigen Verlängerungen sind vorzugsweise senkrecht zur flächigen Erstreckung der Zellhalterrahmen orientiert, wobei die Verschraubung der Zellhalterrahmen vorzugsweise in axialer Richtung erfolgt. In besonders bevorzugter Weise erfolgt die Verschraubung von dem zweiten Zellhalterrahmen aus in Richtung des ersten Zellhalterrahmens.

In einer besonders bevorzugten Ausführungsform der erfindungsgemäßen Batterie ist mindestens eines der folgenden zusätzlichen Merkmale vorgesehen:
a. Die Energiespeicherelemente sind in dem zweiten Zellhalterrahmen lösbar fixiert, insbesondere eingeklemmt.
b. Der zweite Zellhalterrahmen weist zur lösbaren Fixierung der Energiespeicherelemente Klemmelemente, insbesondere Klemmrippen, auf.

Vorzugsweise sind die vorgenannten Merkmale a. und b. in Kombination miteinander realisiert.

Eine lösbare Fixierung der Energiespeicherelemente in dem zweiten Zellhalterrahmen ist besonders vorteilhaft, da hierdurch bei einem gegebenenfalls erforderlichen Austausch einzelner Energiespeicherelemente nach dem Lösen der Verbindung zwischen den Zellhalterrahmen der zweite Zellhalterrahmen abgenommen werden kann, ohne dass die Energiespeicherelemente aus einer festen Fixierung herausgerissen werden müssten.

Die Klemmelemente befinden sich zweckmäßigerweise im Bereich der Aufnahmen des Zellhalterrahmens für die einzelnen Energiespeicherelemente.

Durch die Klemmelemente im zweiten Zellhalterrahmen sind im montierten Zustand die Energiespeicherelemente stabil in dem zweiteiligen Zellhalterrahmen fixiert, so dass deren Funktion gewährleistet ist. Bei dem zum Tauschen einzelner Energiespeicherelemente erforderlichen Abnehmen des zweiten Zellhalterrahmens sollte lediglich darauf geachtet werden, dass die lösbare Fixierung, insbesondere die Klemmung der Energiespeicherelemente in dem zweiten Zellhalterrahmen, vorsichtig gelöst wird, so dass auch bei dem Abnehmen des zweiten Zellhalterrahmens der Verbund der Energiespeicherelemente zunächst erhalten bleibt.

Vorzugsweise sind die Klemmelemente gleichmäßig über den Umfang der Aufnahmen verteilt. Beispielsweise sind drei Klemmelemente pro Aufnahme vorgesehen.

Die Klemmelemente zur lösbaren Fixierung der Energiespeicherelemente in dem zweiten Zellhalterrahmen sind insbesondere Klemmrippen, die in den entsprechenden Aufnahmen des zweiten Zellhalterrahmens für die Energiespeicherelemente eingefügt sind. Bei den Klemmrippen handelt es sich vorzugsweise um schmale Stege aus einem Material mit einer gewissen Elastizität. Besonders geeignet ist ein thermoplastischen Elastomermaterial (TPE).

Vorzugsweise ist der zweite Zellhalterrahmen ein Bauteil aus zwei Komponenten. Die erste Komponente bildet das Grundgerüst des Zellhalterrahmens, wobei hierfür vorzugsweise ein formstabiler Kunststoff verwendet wird. Dieses Grundgerüst ist beispielsweise als Kunststoffspritzgussteil ausgebildet. Die zweite Komponente bildet die Klemmelemente, insbesondere in Form von Klemmrippen im Bereich der einzelnen Aufnahmen für die Energiespeicherelemente. Für diese Klemmrippen wird vorzugsweise ein elastischeres Material als für das Grundgerüst verwendet, vorzugsweise das bereits erwähnte TPE.

In besonders bevorzugten Ausführungsformen der erfindungsgemäßen Batterie ist das folgende zusätzliche Merkmal vorgesehen:
a. Die Energiespeicherelemente sind in dem ersten Zellhalterrahmen durch Verklebung fixiert.

Da die Energiespeicherelemente auf derjenigen endständigen Seite bzw. in dem endständigen Bereich elektrisch kontaktiert sind, der im Bereich des ersten Zellhalterrahmens liegt, ist es besonders vorteilhaft, dass die Energiespeicherelemente in diesem endständigen Bereich, also definitionsgemäß dem ersten endständigen Bereich, mit dem ersten Zellhalterrahmen durch Verklebung fixiert sind. Hierdurch wird sichergestellt, dass die elektrische Kontaktierung, die insbesondere durch Verschweißung realisiert ist, stabil ist und beispielsweise bei Erschütterungen oder Ähnlichem nicht zerstört oder geschwächt wird. Wenn ein einzelnes gegebenenfalls defektes Energiespeicherelement ausgetauscht werden soll, kann nach dem Lösen der Zellhalterrahmen voneinander und dem Abnehmen des zweiten Zellhalterrahmens das jeweilige defekte Energiespeicherelement einzeln herausgebrochen und durch ein neues Energiespeicherelement ersetzt werden. Anschließend kann das neue Energiespeicherelement entsprechend neu kontaktiert werden, indem die erforderlichen Schweißverbindungen für dieses einzelne Energiespeicherelement neu hergestellt werden. Schließlich kann der zweite Zellhalterrahmen wieder aufgesetzt und fixiert werden, so dass nach dem Schließen des Gehäuses die Batterie wieder einsatzfähig ist.

In aller Regel wird auch das neue Energiespeicherelement wieder durch Verklebung fixiert.

In besonders bevorzugter Weise ist bei der erfindungsgemäßen Batterie das folgende zusätzliche Merkmal vorgesehen:
a. Der erste Zellhalterrahmen weist Stege zur Zentrierung der Energiespeicherelemente auf.

Die Stege in dem ersten Zellhalterrahmen erleichtern die korrekte Positionierung der Energiespeicherelemente bei der Montage der Batterie.

Insbesondere sind die Stege, die zweckmäßigerweise im Bereich der Aufnahmen für die einzelnen Energiespeicherelemente in dem ersten Zellhalterrahmen vorgesehen sind, so ausgebildet, dass sie eine optimale Zentrierung der Energiespeicherelemente in den entsprechenden Aufnahmen des ersten Zellhalterrahmens gewährleisten. Hierdurch werden die Energiespeicherelemente bei einer vorzugsweise vorgesehenen anschließenden Verklebung optimal ausgerichtet, so dass eine nachfolgende elektrische Kontaktierung präzise möglich ist.

Vorzugsweise sind die Stege gleichmäßig über den Umfang der Aufnahmen verteilt. Beispielsweise sind drei Stege pro Aufnahme vorgesehen.

Insgesamt erlaubt die erfindungsgemäße Batterie einen besonders einfachen und vorteilhaften Austausch einzelner Energiespeicherelemente, beispielsweise im Fall einer einzelnen defekten Zelle. Nach dem Öffnen des Gehäuses und dem Abschrauben und Entfernen des zweiten Zellhalterrahmens muss lediglich das zu tauschende Energiespeicherelemente aus dem ersten Zellhalterrahmen herausgebrochen werden. Gegebenenfalls kann es vorteilhaft sein, die elektrische Kontaktierung (z.B. Verschweißung) des defekten Energiespeicherelements im Bereich des ersten Zellhalterrahmens vorab aufzutrennen. Nach einem Austausch des defekten Energiespeicherelements durch ein neues Energiespeicherelement wird gegebenenfalls das Energiespeicherelement im Bereich des ersten Zellhalterrahmens erneut verklebt und die Schweißverbindung für die elektrische Kontaktierung wird wiederhergestellt.

In besonders bevorzugten Ausführungsformen der erfindungsgemäßen Batterie ist mindestens eines der folgenden zusätzlichen Merkmale vorgesehen:
a. Der erste Zellhalterrahmen weist Leitelemente zur Verteilung von Klebstoff auf.
b. Der zweite Zellhalterrahmen weist Durchführungsöffnungen für Klebstoff auf.

Vorzugsweise sind die vorgenannten Merkmale a. und b. in Kombination miteinander realisiert.

Diese bevorzugten Ausgestaltungen des ersten und/oder des zweiten Zellhalterrahmens erleichtern die Verklebung der Energiespeicherelemente im Zuge der Montage der erfindungsgemäßen Batterie. Dabei ist es zweckmäßigerweise vorgesehen, dass der Klebstoff von der Seite des zweiten Zellhalterrahmens aufgetragen wird.

Für die Verklebung wird der Klebstoff in den Bereichen der Durchführungsöffnungen gemäß dem vorgenannten Merkmal b. appliziert. Der zunächst flüssige Klebstoff durchläuft den Bereich des zweiten Zellhalterrahmens und wird in den Bereich des ersten Zellhalterrahmens geleitet. Durch die im ersten Zellhalterrahmen gemäß dem vorgenannten Merkmal a. vorzugsweise vorgesehenen Leitelemente wird der Klebstoff in die Bereiche der Aufnahmen für die einzelnen Energiespeicherelemente in dem ersten Zellhalterrahmen gelenkt. Hier sorgt der Klebstoff für eine feste Fixierung der Energiespeicherelemente an dem ersten Zellhalterrahmen.

Die Leitelemente können beispielsweise als abschüssige Flächen zwischen den einzelnen Aufnahmen ausgebildet sein, die den Klebstoff in die Aufnahmen leiten. Weiterhin können als Leitelemente beispielsweise breite Stege vorgesehen sein, die zwischen den Aufnahmen angeordnet sind und die über die Aufnahmen hervorragen.

Als Klebstoffe können für derartige Anwendungen übliche Klebstoffe eingesetzt werden, beispielsweise Einkomponentenkleber oder, besonders bevorzugt, Zweikomponentenkleber. Geeignet sind beispielsweise Kleber, die durch UV-Bestrahlung gehärtet werden.

In bevorzugten Ausführungsformen weist der Klebstoff eine thermische Leitfähigkeit auf, beispielsweise in einem Bereich zwischen 0,5 bis 5 W/m*K. Der besondere Vorteil liegt hierbei darin, dass eine sich entwickelnde Wärme im Bereich der Energiespeicherelemente der Batterie besonders gut nach außen über das Gehäuse abgeleitet werden kann.

Damit der Kleber im Zuge der Montage in besonders guter Weise die in dem zweiten Zellhalterrahmen vorgesehenen Durchführungsöffnungen durchlaufen kann und in den Bereich des ersten Zellhalterrahmens gelangt, weist der Kleber vorzugsweise eine angepasste Viskosität auf, beispielsweise eine Viskosität in einem Bereich um 5.000 Pa*s auf.

Vorzugsweise wird ein solcher Kleber eingesetzt, der nach dem Aushärten ein dauerelastisches, zähes Verhalten zeigt. Damit können einerseits die Energiespeicherelemente stabil fixiert werden. Andererseits wird hierdurch eine Flexibilität bei der Fixierung gewährleistet, sodass es bei Erschütterungen oder Ähnlichem nicht zu einem Bruch der Klebeverbindung kommt.

In besonders bevorzugten Ausführungsformen der erfindungsgemäßen Batterie ist mindestens eines der folgenden zusätzlichen Merkmale vorgesehen:
a. Die Energiespeicherelemente sind zylindrische Rundzellen.
b. Alle Energiespeicherelemente sind mit gleicher Ausrichtung ihrer Polaritäten nebeneinander angeordnet.
c. Die elektrische Kontaktierung der Energiespeicherelemente erfolgt über einen Pol-Pin und eine Zellschulter, die sich in dem ersten endständigen Bereich der Energiespeicherelemente befinden.

Vorzugsweise sind die vorgenannten Merkmale a. und b. oder, besonders bevorzugt, die vorgenannten Merkmale a., b. und c. in Kombination miteinander verwirklicht.

Entsprechend der runden Grundform der zylindrischen Rundzellen sind in dieser Ausführungsform der erste und der zweite Zellhalterrahmen vorzugsweise mit kreisförmigen oder teilkreisförmigen Aufnahmen für die Energiespeicherelemente ausgebildet.

Bei der Verwendung von zylindrische Rundzellen für die erfindungsgemäße Batterie ist es erforderlich, dass an einer Stirnseite der Rundzellen sowohl der Pluspol als auch der Minuspol abgegriffen werden können. Die Rundzellen sind dabei vorzugsweise so ausgebildet, dass der Pluspol an einer Stirnseite der Rundzellen als zentrale, zylindrische Erhebung auf der Fläche der Stirnseite ausgebildet ist (Pol-Pin). Der Minuspol wird von der gegenüberliegenden Stirnseite und dem Zellmantel gebildet, wobei der Minuspol auch über die Zellschulter abgegriffen werden kann, die auf der Seite des Pluspols liegt. Zwischen der Zellschulter und dem auf dieser Stirnseite hervorstehenden Pluspol befindet sich vorzugsweise eine elektrische Isolierung, so dass ein Kurzschluss zwischen Pluspol und Minuspol ausgeschlossen ist. In anderen Ausführungsformen können eine vergleichbare Ausgestaltung mit umgedrehten Polaritäten vorgesehen sein.

Um die elektrische Kontaktierung der Energiespeicherelemente in dem ersten endständigen Bereich der Energiespeicherelemente zu erleichtern, kann es vorgesehen sein, dass in dem ersten Zellhalterrahmen entsprechende Ausschnitte bzw. Aussparungen vorgesehen sind, die den Zugang zu der ersten endständigen Stirnseite des jeweiligen Energiespeicherelements beispielsweise für eine Verschweißung erleichtern.

In besonders bevorzugter Weise werden zylindrische Rundzellen mit dem Formfaktor Typ 21700 verwendet. Typ 21700 bezeichnet die bevorzugten Abmessungen der Energiespeicherelemente und bezieht sich auf einen Außendurchmesser von 21 mm und eine Länge von 70 mm.

Besonders bevorzugt sind Lithium-Ionen-Energiespeicherelemente bzw. Lithium-Ionen-Zellen, da Lithium-Ionen-Zellen sich durch eine besonders große Energiedichte bei vergleichsweise niedrigem Gewicht auszeichnen.

Allgemein basieren Lithium-Ionen-Energiespeicherelemente auf dem Einsatz von Lithium, welches in Form von Ionen zwischen den Elektroden des Elements hin und her wandern kann.

Die negative Elektrode und die positive Elektrode eines Lithium-Ionen-Energiespeicherelements werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Elemente kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Die Aktivmaterialien sind in der Regel als Schicht auf einem bandförmige Stromkollektor aufgebracht. Der Stromkollektor stellt dabei eine elektrochemisch inaktive Komponente des Energiespeicherelements dar. Als Stromkollektoren kommen insbesondere metallische Folien zum Einsatz, die als Träger für das jeweilige Aktivmaterial dienen. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Energiespeicherelemente meist Lösungen von Lithiumsalzen wie Lithiumhexafluorophosphat (LiPF₆) in organischen Lösungsmitteln (z. B. Ether und Ester der Kohlensäure).

In zylindrischen Rundzellen sind die Elektroden der Zelle in der Regel in Form eines Wickels angeordnet, wobei zwischen den bandförmigen Elektroden mindestens ein bandförmiger Separator angeordnet ist. In anderen Ausführungsformen, insbesondere bei prismatischen Energiespeicherelementen, können die Elektroden auch in gestapelter Form vorliegen.

In weiteren Ausführungsformen der erfindungsgemäßen Batterie können auch Energiespeicherelemente verwendet werden, die auf einer anderen Zellchemie beruhen, beispielsweise Natrium-Ionen-Zellen oder anderes.

Die positiven und negativen Pole der Energiespeicherelemente können prinzipiell auf verschiedene Weise elektrisch kontaktiert werden. Beispielsweise kann die elektrische Kontaktierung an Ableitern in Form von metallischen Streifen, mit denen die positiven und negativen Pole direkt oder indirekt verschweißt werden, in an sich bekannter Weise vorgenommen werden. Beispielsweise können für die serielle und/oder parallele Verschaltung der Energiespeicherelemente untereinander Blechteile (Busbars) verwendet werden, an die die einzelnen Energiespeicherelemente mittels Widerstandsschweißen angebunden werden. Die Blechteile selbst können an Kabelbäume angeschlossen werden, die über Steckverbindungen mit einer Elektronik, insbesondere mit einem Batteriemanagementsystem, verbunden werden.

Alternativ zu solchen Blechteilen oder anderen Ableitern als weitere Elemente, mit denen die Pole der Energiespeicherelemente elektrisch kontaktiert werden, ist in besonders bevorzugten Ausführungsformen der erfindungsgemäßen Batterie eine Leiterplatte als weiteres Element vorgesehen, an der die Plus- und Minuspole der Energiespeicherelemente elektrisch angebunden werden. Demgemäß weist die erfindungsgemäße Batterie in bevorzugten Ausführungsformen mindestens eines der folgenden zusätzlichen Merkmale auf:
a. Die Batterie umfasst als weiteres Element eine Leiterplatte.
b. Die Leiterplatte weist für jedes der Energiespeicherelemente zwei Anschlusskontakte auf.
c. Die positiven und die negativen Pole der Energiespeicherelemente sind über elektrische Leiter mit den Anschlusskontakten der Leiterplatte verbunden.
d. Die elektrischen Leiter sind Drähte.
e. Die Verbindung der positiven und der negativen Pole mit den Anschlusskontakten der Leiterplatte basiert auf einem Ultraschall-Verschweißen.

Vorzugsweise sind die vorgenannten Merkmale a. und b., oder a. und b. und c, oder a. und b. und c. und d., oder, besonders bevorzugt, die Merkmale a. bis e. in Kombination miteinander realisiert.

Als Alternative zu einem Ultraschall-Verschweißen kann beispielsweise auch ein Laser-Verschweißen verwendet werden. Ein Verschweißen mit Ultraschall hat demgegenüber jedoch den Vorteil, dass es nicht zu einer maßgelblichen Wärmeentwicklung kommt und dass daher mit sehr dünnen Lagen der stromführenden Leiter in der Leiterplatte, insbesondere mit sehr dünnen Kupferlagen, gearbeitet werden kann.

Alternativ zu der Verwendung von Drähten als elektrische Leiter können beispielsweise auch metallische Streifen als elektrische Leiter eingesetzt werden.

Insbesondere erfolgt die Kontaktierung der Energiespeicherelemente mit dem Verfahren des sogenannten *Wirebonding.* Mit diesem Verfahren können die elektrischen Leiter vorzugsweise in automatisierter Weise an den entsprechenden Kontaktpunkten durch ein Ultraschall-Verschweißen angebracht werden. Dieses Verfahren erlaubt bei der Fertigung der erfindungsgemäßen Batterie einen hohen Grad an Automatisierung. Gleichzeitig wird eine zuverlässige und stabile Kontaktierung der Energiespeicherelemente an der Leiterplatte erreicht. Darüber hinaus erfordert diese Art der Kontaktierung der Energiespeicherelemente nur wenig Bauraum, da auf weitere Kabel- und Steckverbindungen verzichtet werden kann.

Bei dem Verfahren des *Wirebonding* werden die elektrischen Leiter in Form von kurzen Drähten oder metallischen Streifen an den entsprechenden Stellen der Energiespeicherelemente bzw. der Rundzellen angesetzt, zu den entsprechenden Anschlusskontakten der Leiterplatte geführt und mit Ultraschall verschweißt.

In besonders bevorzugten Ausführungsformen der erfindungsgemäßen Batterie ist mindestens eines der folgenden zusätzlichen Merkmale vorgesehen:
a. Die Leiterplatte weist Durchbrechungen auf, durch die die elektrischen Leiter geführt sind.
b. Je zwei mit einem Energiespeicherelement verbundene elektrische Leiter sind durch eine Durchbrechung geführt.
c. Die Durchbrechungen weisen eine Fläche in einem Bereich von 25 mm² bis 100 mm² auf.

In besonders bevorzugter Weise sind die vorgenannten Merkmale a. und b., oder besonders bevorzugt, die vorgenannten Merkmale a. bis c. in Kombination miteinander verwirklicht.

Die Ausgestaltung der Leiterplatte der erfindungsgemäßen Batterie mit Durchbrechungen gemäß dem vorgenannten Merkmal a. hat den besonderen Vorteil, dass diese Ausgestaltung eine besondere Flexibilität bei der Ausbildung der Anschlusskontakte auf der Leiterplatte bietet. Insbesondere können in dieser Ausgestaltung sämtliche Anschlusskontakte auf ausschließlich einer Seite (Flachseite) der Leiterplatte ausgebildet werden, da die elektrischen Leiter durch die Durchbrechungen hindurchgeführt und auf der entsprechenden Seite der Leiterplatte angeschlossen werden können. In dieser Ausführungsform liegen alle Anschlusskontakte auf derjenigen Flachseite der Leiterplatte, die den Energiespeicherelementen abgewandt ist.

Die Durchbrechungen können insbesondere so ausgebildet sein, dass pro Energiespeicherelement eine Durchbrechung vorgesehen ist. Die mit dem Minuspol und mit dem Pluspol kontaktierten elektrischen Leiter eines Energiespeicherelements können durch die Durchbrechung geführt und auf derjenigen Flachseite der Leiterplatte, die von der Anordnung der Energiespeicherelemente abgewandt ist, mit den entsprechenden Anschlusskontakten der Leiterplatte elektrisch kontaktiert werden.

Die Durchbrechungen sind vorzugsweise als Löcher in der Leiterplatte ausgebildet, beispielsweise mit einer rechteckigen oder runden Form. Es ist auch möglich, dass sich die Durchbrechungen in einem randständigen Bereich der Leiterplatte befinden, sodass es sich bei diesen Durchbrechungen um Aussparungen (Ausschnitte) im Randbereich, aber nicht um abgeschlossene Löcher handelt.

Vorzugsweise weisen die Durchbrechungen eine Mindestgröße von 25 mm² auf. Diese Mindestgröße ist besonders vorteilhaft, da hierdurch der Schweißvorgang zur Kontaktierung der elektrischen Leiter, beispielsweise im Rahmen des bereits erwähnten *Wirebonding,* erleichtert wird. In besonders bevorzugter Weise liegt die Fläche der Durchbrechungen gemäß dem vorgenannten Merkmal c. in einem Bereich von 25 mm² bis 100 mm². Diese Flächengröße der Durchbrechungen ist besonders für zylindrische Rundzellen mit einem Formfaktor Typ 21700 als Energiespeicherelemente der Batterie geeignet.

Vorzugsweise sind die zylindrischen Rundzellen innerhalb der Batterie so ausgerichtet, dass die jeweiligen Pluspole nach oben weisen. In diesem Bereich liegt die beschriebene Leiterplatte auf und wird von dem ersten Zellhalterrahmen des Zellhalters gestützt. Da sich die zylindrischen Rundzellen durch den Zellhalter in einer fixierten Position befinden und ein Mindestabstand zwischen den zylindrischen Rundzellen gewährleistet ist, bedürfen die Zellen keiner weiteren Isolation einander gegenüber und können beispielsweise ohne einen Schrumpfschlauch verwendet werden. Die aufgrund der Form zwangsläufigen freien Zwischenräume zwischen den zylindrischen Rundzellen gewährleisten darüber hinaus eine gute Belüftung und Wärmeabfuhr.

Um den Anforderungen an eine zeitgemäße Batterie gerecht zu werden, umfasst die erfindungsgemäße Batterie vorzugsweise ein Batteriemanagementsystem. Das Batteriemanagementsystem stellt die Schutzelektronik der Batterie dar und regelt vorzugsweise alle Sicherheitsfunktionen, wie insbesondere einen Überspannungsschutz, einen Tiefenentladungsschutz, eine Kurzschlusssicherung, einen Über-Strom-Schutz und einen Temperaturschutz. Darüber hinaus kann das Batteriemanagementsystem zusätzliche Funktionen, wie insbesondere ein *Balancing* zum Ladungsausgleich zwischen einzelnen Energiespeicherelementen, sowie Kommunikationsschnittstellen realisieren.

Die Elektronik des Batteriemanagementsystems kann neben den verschiedenen Schutzschaltungen beispielsweise auch eine Logik-Kommunikation realisieren.

Für das Batteriemanagementsystem kann in an sich bekannter Weise ein separates Elektronikbauteil (Elektronikplatine) in der Batterie verbaut sein. In besonders bevorzugten Ausführungsformen der erfindungsgemäßen Batterie umfasst das Batteriemanagementsystem eine Elektronik, die in die erwähnte Leiterplatte der Batterie integriert ist.

Durch die Integration der Elektronik für das Batteriemanagementsystem in die Leiterplatte ist ein vollständiger Verzicht auf eine separate Elektronikplatine möglich. Hierdurch wird die Anzahl der Bauteile bei der erfindungsgemäßen Batterie im Vergleich mit herkömmlichen Batterien maßgeblich reduziert, so dass Gewicht, Bauraum und auch die Herstellungskosten deutlich geringer als bei herkömmlichen Batterien ausfallen können. Die einzige Leiterplatte der Batterie führt dabei sowohl die Leistung als auch Messströme und andere Signale, die im Rahmen eines Batteriemanagementsystems genutzt werden können. In dieser Ausführungsform mit einer einzigen Leiterplatte kann das Batteriemanagementsystem über die elektrischen Leiter, beispielsweise die Drähte, direkt mit den einzelnen Energiespeicherelementen verbunden sein.

Die Verbünde der einzelnen Energiespeicherzellen, beispielsweise die Parallelverbünde der einzelnen Energiespeicherelemente mit gleichem Potential, können direkt in der Leiterplatte integriert sein. Auf diesem Potential können ebenfalls die Spannungsmesssignale und gegebenenfalls andere sensorische Signale auf der Leiterplatte integriert sein. Neben einer Spannungsmessung kann beispielsweise auch eine Temperaturmessung direkt in die Leiterplatte integriert werden. In dieser Ausführungsform sind insofern keine weiteren Kabel oder Stecker für diese Funktionen erforderlich.

Im Hinblick auf das Batteriemanagementsystem zeichnet sich die erfindungsgemäße Batterie in diesen bevorzugten Ausführungsformen durch mindestens eines der folgenden zusätzlichen Merkmale aus:
a. Die Elektronik des Batteriemanagementsystems umfasst Mess- und/oder Steuer- und/oder Schutzschaltungen.
b. Die Elektronik des Batteriemanagementsystems umfasst mindestens einen Mikroprozessor zur Ansteuerung der Schaltungen.
c. Die Elektronik des Batteriemanagementsystems umfasst eine Lade- und Entladeelektronik.
d. Die Elektronik des Batteriemanagementsystems umfasst eine Schaltung zur gleichmäßigen Ladungsverteilung zwischen den Energiespeicherelementen.
e. Die Elektronik des Batteriemanagementsystems umfasst mindestens einen Spannungswandler.

In bevorzugten Ausführungsformen sind die Merkmale gemäß den vorgenannten Merkmalen a. bis d. in Kombination miteinander verwirklicht. In besonders bevorzugter Weise ist zusätzlich das vorgenannte Merkmal e. in Kombination mit den Merkmalen a. bis d. vorgesehen.

Im Unterschied zu herkömmlichen Batterien mit einem Batteriemanagementsystem zeichnet sich die erfindungsgemäße Batterie gemäß dieser bevorzugten Ausführungsform dadurch aus, dass sie mit einer reduzierten Anzahl von Bauteilen realisiert ist. Mit ausschließlich einer Leiterplatte können sowohl die elektrische Verschaltung der einzelnen Energiespeicherelemente (serielle (S-) und/oder parallele (P-) Verschaltung) als auch die erforderliche elektronische Kontrolle und das elektronische Management realisiert sein. Hierdurch ist im Vergleich mit herkömmlichen Batterien ein deutlich kompakterer und platzsparender Aufbau der Batterie möglich, so dass der Bauraum und das Gewicht der erfindungsgemäßen Batterie im Vergleich mit herkömmlichen Batterien in besonders vorteilhafter Weise reduziert werden können.

Der Spannungswandler gemäß dem vorgenannten Merkmal e. kann insbesondere genutzt werden, um eine oder mehrere Nebenspannungen bereitzustellen, die beispielsweise in einem Spannungsbereich von 8 bis 15 V, vorzugsweise 9 bis 13 V, und besonders bevorzugt bei 12 V liegt. In bevorzugten Ausführungsformen können mehrere Spannungswandler vorgesehen sein, beispielsweise drei Spannungswandler, die drei Kanäle mit beispielsweise 12 V bereitstellen.

Die Nebenspannungen der Batterie können für verschiedene (externe) Funktionen genutzt werden. Bei einem elektrischen Fahrrad können mit den Nebenspannungen beispielsweise eine Beleuchtung, eine Beheizung des Sattels und/oder des Lenkers, Navigation, Radarfunktionen, Airbag oder Ähnliches betrieben werden.

Die Hauptspannung der Batterie kann beispielsweise in einem Spannungsbereich von 30 bis 60 V, beispielsweise 48 V, liegen. Ein solcher Spannungsbereich ist insbesondere für elektrische Fahrräder geeignet. Je nach Anwendungsfeld der erfindungsgemäßen Batterie kann die bereitgestellte Hauptspannung auch höher oder niedriger liegen.

Die Anzahl der Energiespeicherelemente in der erfindungsgemäßen Batterie kann je nach Anwendungsbereich der Batterie gewählt werden. Geeignet für eine Fahrradbatterie ist beispielsweise eine Anzahl von 39 Energiespeicherelementen pro Batterie (zylindrische Lithium-lonen-Rundzellen, Typ 21700). Die 39 Energiespeicherelemente können beispielsweise in drei Reihen zu jeweils 13 Zellen angeordnet sein.

In besonders bevorzugten Ausführungsformen weist die erfindungsgemäße Batterie mindestens eines der folgenden zusätzlichen Merkmale auf:
a. Die Batterie ist ein Wechsel-Akkumulator,
b. die Batterie ist ein Akkumulator für ein elektrisches Fahrzeug,
c. die Batterie ist ein Akkumulator für ein elektrisches Fahrrad.

Vorzugsweise sind die vorgenannten Merkmale a. und b. und, besonders bevorzugt, die vorgenannten Merkmale a. bis c. in Kombination miteinander realisiert.

In besonders bevorzugter Weise ist die erfindungsgemäße Batterie ein Wechsel-Akkumulator, der mit wenigen Handgriffen an einen elektrischen Verbraucher und wechselweise bei Bedarf an eine Ladeeinrichtung zum Aufladen des Akkumulators angeschlossen werden kann.

Die erfindungsgemäße Batterie kann für grundsätzlich jedes elektrische Fahrzeug eingesetzt werden, beispielsweise für einen elektrischen Roller, einen elektrischen Rollstuhl oder andere elektrische Fahrzeuge. Weiterhin kann die Batterie beispielsweise für die Energieversorgung eines Roboters, beispielsweise eines Serviceroboters oder für Ähnliches, verwendet werden. Weiterhin ist die Batterie auch als Spannungsquelle für elektrische Werkzeuge oder ähnliches einsetzbar.

In besonders bevorzugten Ausführungsformen handelt es sich bei der erfindungsgemäßen Batterie um einen Wechsel-Akkumulator für ein elektrisches Fahrrad. Insbesondere bei einem elektrischen Fahrrad kommen die besonderen Vorteile der erfindungsgemäßen Batterie besonders zum Tragen, da die erfindungsgemäße Batterie für das jeweilige Anforderungsprofil bei der Herstellung des Fahrrads in sehr vorteilhafter Weise konfektioniert werden kann und sich durch ein leichtes Gewicht und einen geringen Platzbedarf auszeichnet.

Das Gehäuse der Batterie kann beispielsweise eine quaderförmige Grundform, insbesondere eine quaderförmige Grundform, mit mindestens vier Längsseiten und einer ersten und einer zweiten Stirnseite aufweisen. Die erste Stirnseite wird vorzugsweise von einer Endkappe mit einem Stecker, beispielsweise mit einem integrierten Stecker in Form eines endkappenförmigen Steckerbauteils gebildet. Weiterhin kann in die Endkappe beispielsweise eine Ladezustands-Anzeige und/oder ein *Touch Button* als Bedienelement der Batterie integriert sein.

Allgemein eignet sich eine Grundform mit vier oder mehr Längsseiten, insbesondere eine quaderförmige Grundform mit vier Längsseiten, für verschiedene Anwendungen der erfindungsgemäßen Batterie, insbesondere beispielsweise für eine Verwendung als Fahrradbatterie. Eine quaderförmige Grundform kann auch abgewandelt werden und beispielsweise abgekantete Längsseiten aufweisen, sodass beispielsweise eine Grundform mit sechs oder acht Längsseiten und zwei Stirnseiten ausgebildet wird.

Über die Endkappe mit dem Stecker kann die elektrische Verbindung beispielsweise mit dem Fahrrad oder einem anderen Verbraucher und wechselweise mit einem Ladegerät in an sich bekannter Weise hergestellt werden.

Darüber hinaus weist das Gehäuse vorzugsweise Rastmittel oder Ähnliches auf, mit dem die Batterie beispielsweise am Rahmen eines Fahrrads oder Ähnlichem befestigt werden kann.

Als geeignete Materialien für das Gehäuse sind wegen ihrer besonderen Stabilität metallische Werkstoffe besonders bevorzugt. Aluminium eignet sich besonders, da hierdurch das Gewicht der resultierenden Batterie verhältnismäßig niedrig gehalten werden kann. Darüber hinaus hat Aluminium den weiteren Vorteil, dass es gute Wärmeabführungseigenschaften aufweist, die für die erfindungsgemäße Batterie vorteilhaft sind.

Besonders bevorzugt ist ein Gehäuse mit einer länglichen Grundform und einem rechteckigen Querschnitt, wobei das Gehäuse vorzugsweise von einer metallischen Röhre mit einem rechteckigen (gegebenenfalls näherungsweise quadratischem) Querschnitt und zwei Endkappen, vorzugsweise aus Kunststoff, gebildet wird. Eine solche Form des Gehäuses gewährleistet zum einen eine hohe Stabilität und bietet zum anderen vorteilhafte Möglichkeiten zur Anordnung der Energiespeicherelemente innerhalb des Gehäuses. Die längliche Form macht die Batterie weiterhin insbesondere für die Verwendung als Fahrradbatterie geeignet, da ein solches längliches Gehäuse in vorteilhafter Weise am oder im Bereich des Rahmens eines Fahrrads angebracht werden kann.

Bei der Herstellung der erfindungsgemäßen Batterie ist ein hoher Grad an Automatisierung möglich. Weiterhin ist im Vergleich mit herkömmlichen Batterien ein geringeres Gewicht und ein geringerer Bauraumbedarf möglich. Darüber hinaus ist eine sehr flexible Anordnung der einzelnen Energiespeicherelemente möglich. Durch die einseitige Kontaktierung der Energiespeicherelemente wird zudem eine sehr gute thermische Anbindung der Energiespeicherelemente erreicht. Darüber hinaus ist eine Reduzierung der Kosten durch weniger Bauteile und den vorteilhaften Fertigungsprozess möglich.

Die Erfindung umfasst weiterhin einen Zellhalter für eine Batterie mit einem Gehäuse und einer Mehrzahl daran angeordneter, wiederaufladbarer elektrochemischer Energiespeicherelemente gemäß der obigen Beschreibung. Der erfindungsgemäße Zellhalter zeichnet sich insbesondere durch die folgenden Merkmale aus:
a. Der Zellhalter ist zweiteilig und umfasst einen ersten Zellhalterrahmen und einen zweiten Zellhalterrahmen, und
b. der erste Zellhalterrahmen ist zur Fixierung der Energiespeicherelemente in deren ersten endständigen Bereichen und der zweite Zellhalterrahmen ist zur Fixierung der Energiespeicherelemente in deren zweiten endständigen Bereichen vorgesehen, und
c. der erste Zellhalterrahmen und der zweite Zellhalterrahmen sind zur lösbaren Verbindung miteinander vorgesehen.

Der Zellhalter zeichnet sich in besonders bevorzugter Weise durch das folgende zusätzliche Merkmal aus:
a. Der erste Zellhalterrahmen und der zweite Zellhalterrahmen sind durch Schraubverbindungen lösbar miteinander verbunden.

Weiterhin ist es besonders bevorzugt, dass der zweite Zellhalterrahmen zur lösbaren Fixierung der Energiespeicherelemente Klemmelemente, insbesondere Klemmrippen, aufweist. Zusätzlich oder alternativ dazu weist der erste Zellhalterrahmen Stege zur Zentrierung der Energiespeicherelemente auf.

In besonders bevorzugter Weise ist der erfindungsgemäße Zellhalter so ausgebildet, dass im Bereich des ersten Zellhalterrahmens eine Verklebung der Energiespeicherelemente vorgesehen ist. Diesbezüglich zeichnet sich der erfindungsgemäße Zellhalter insbesondere durch mindestens eines der folgenden zusätzlichen Merkmale aus:
a. Der erste Zellhalterrahmen weist Leitelemente zur Verteilung von Klebstoff auf.
b. Der zweite Zellhalterrahmen weist Durchführungsöffnungen für Klebstoff auf.

Bezüglich der besonderen Vorteile dieser verschiedenen Merkmale des erfindungsgemäßen Zellhalters wird auf die obige Beschreibung verwiesen, in der bereits die bevorzugten Ausgestaltungen des Zellhalters im Zusammenhang mit der Beschreibung der erfindungsgemäßen Batterie ausgeführt wurden.

Der Zellhalter ist vorzugsweise im Wesentlichen aus Kunststoff gebildet, wobei der erste Zellhalterrahmen und der zweite Zellhalterrahmen jeweils beispielsweise als Kunststoffspritzgussteile hergestellt sein können. Zusätzlich können einige Komponenten der Zellhalterrahmen auch aus anderen Materialen gefertigt sein. Insbesondere können die in bevorzugten Ausführungsformen vorgesehenen Klemmelemente des zweiten Zellhalterrahmens aus einem elastischeren Material, beispielsweise aus TPE, gebildet sein.

In Anpassung an einen runden Querschnitt der für die Batterie bevorzugten zylindrischen Rundzellen als Energiespeicherelemente weisen die Zellhalterrahmen vorzugsweise kreisförmige oder teilkreisförmige Aufnahmen auf, in die die zylindrischen Rundzellen eingesetzt werden können.

Zur stabilen, klebstofffreien Halterung der Energiespeicherelemente insbesondere in dem zweiten Zellhalterrahmen können in bevorzugter Weise als Klemmelemente beispielsweise Klemmrippen vorgesehen sein, beispielsweise drei Klemmrippen, die über den Umfang der kreisförmigen Aufnahme verteilt sind. Auch in dem ersten Zellhalterrahmen können mit den Klemmrippen vergleichbare Stege über den Umfang der Aufnahmen für die Energiespeicherelemente vorgesehen sein, die insbesondere zur Zentrierung der Energiespeicherelemente dienen. Auch hier können beispielsweise drei Stege über den Umfang der Aufnahmen für jeweils eine zylindrische Rundzelle vorgesehen sein.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander realisiert sein.

### KURZE BESCHREIBUNG DER ZEICHNUNGEN

In den Zeichnungen zeigen:
- Fig. 1: Seitliche Außenansicht einer bevorzugten Ausführungsform einer erfindungsgemäßen Batterie;
- Fig. 2: seitliche Teilansicht einer erfindungsgemäßen Batterie mit den Energiespeicherelementen und dem zweiteiligen Zellhalter ohne das übrige Gehäuse;
- Fig. 3: Detailansicht eines Abschnitts des ersten Zellhalterrahmens; und
- Fig. 4: Detailansicht eines Abschnitts des zweiten Zellhalterrahmens.

### BESCHREIBUNG BEVORZUGTER AUSFÜHRUNGSBEISPIELE

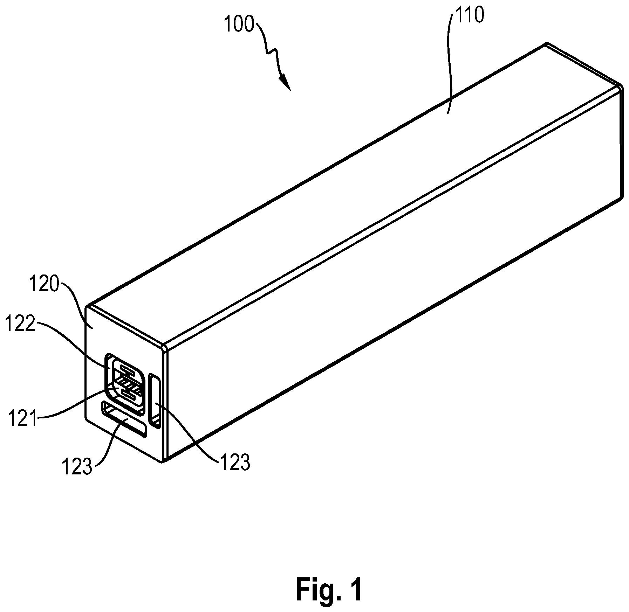

**Fig. 1** zeigt eine Außenansicht einer bevorzugten Ausführungsform einer erfindungsgemäßen Batterie 100. Das Gehäuse der Batterie 100 umfasst einen vorzugsweise metallischen Grundkörper 110 und eine vordere stirnseitige Endkappe 120 sowie eine hintere, hier nicht sichtbare stirnseitige Endkappe.

Der Grundkörper 110 kann beispielsweise von einer Aluminiumröhre mit einem rechteckigen Querschnitt gebildet sein.

Innerhalb des Grundkörpers 110 sind die elektrochemischen Energiespeicherelemente der Batterie angeordnet. Vorzugsweise handelt es sich um Lithium-lonen-Zellen in Form von zylindrischen Rundzellen. Die zylindrische Rundzellen sind innerhalb des Gehäuses mit paralleler Ausrichtung ihrer Längsachsen in einer Ebene und gegebenenfalls in mehreren parallelen Reihen angeordnet.

Die elektrische Verschaltung der Energiespeicherelemente erfolgt vorzugsweise direkt über eine Leiterplatte, die vorzugsweise auch die Batteriemanagement-Elektronik trägt.

In die dem Betrachter zugewandte stirnseitige Endkappe 120 der Batterie 100 ist in dieser Ausführungsform der Batterie ein Stecker 121 integriert, über den die Strom- und Signalführung nach außen erfolgt. Die Endkappe 120 ist als Kunststoffspritzgussteil ausgebildet. Der Stecker 121 ist von einer umlaufenden Vertiefung 122 umgeben. Die Vertiefung 122 dient als Führung für das einzusteckende Gegenstück des Steckers.

Auf der Außenfläche der Endkappe 120 sind weiterhin zwei rinnenförmige Vertiefungen 123 vorgesehen. Diese Vertiefungen 123 bilden Halte- und/oder Führungselemente für die Halterung der Batterie 100, beispielsweise am Rahmen eines elektrischen Fahrrads. Die Vertiefungen 123 können insbesondere als Positionierhilfen für die Anbringung der Batterie 100 an dem Fahrrad dienen.

Die der Endkappe 120 gegenüberliegende Stirnseite des Gehäuses kann ebenfalls von einem Kunststoffspritzgussteil als weiterer Endkappe verschlossen sein. Alternativ können die Endkappen auch aus Aluminium oder einem anderen Metall gebildet sein.

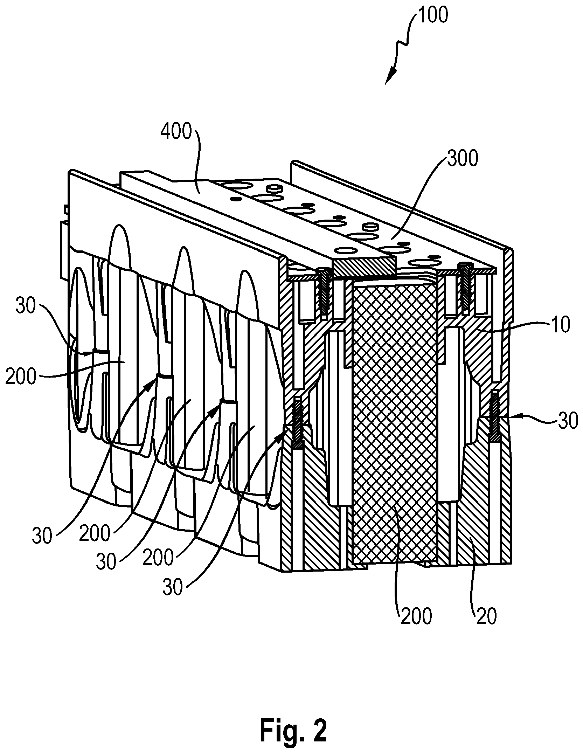

**Fig. 2** zeigt eine seitliche Ansicht eines Abschnitts einer erfindungsgemäßen Batterie 100, wobei das Gehäuse der Batterie nicht gezeigt ist. Zu erkennen sind die im Inneren der Batterie enthaltenden zylindrischen Rundzellen 200, die aufrecht stehend in drei parallelen Reihen angeordnet sind. Es können in der Batterie beispielsweise insgesamt 39 zylindrische Rundzellen vorgesehen, die in drei Reihen zu jeweils 13 Rundzellen angeordnet sind.

Die zylindrischen Rundzellen 200 werden von einem oberen, ersten Zellhalterrahmen 10 und einem unteren, zweiten Zellhalterrahmen 20 gehalten und fixiert. Im Bereich des ersten Zellhalterrahmens 10 ist eine Leiterplatte 300 vorgesehen, über die die elektrische Verschaltung der zylindrischen Rundzellen 200 erfolgt.

In dieser Ausführungsform ist weiterhin auf der oberen Fläche der Leiterplatte 300 ein Streifen 400 aus einem wärmeleitenden Material (thermisches Schnittstellenmaterial) vorgesehen, der für eine gute Wärmeabführung an das hier nicht dargestellte Gehäuse sorgt.

Der Kernpunkt der Erfindung liegt darin, dass die Batterie 100 so ausgebildet ist, dass ein einfacher Austausch von einzelnen, gegebenenfalls defekten Energiespeicherelementen möglich ist. Ein wichtiger Punkt der Erfindung liegt dabei darin, dass der zweiteilige Zellhalter, der von dem ersten Zellhalterrahmen 10 und dem zweiten Zellhalterrahmen 20 gebildet ist, derart ausgebildet ist, dass beide Zellhalterrahmen lösbar miteinander verbunden sind. Eine Trennung der Zellhalterrahmen ist dabei zerstörungsfrei möglich. Die Lösbarkeit der Zellhalterrahmen 10, 20 wird in dieser Ausführungsform durch Schraubverbindungen 30 zwischen dem ersten und dem zweiten Zellhalterrahmen 10, 20 realisiert. Bei Bedarf können die Schraubverbindungen 30 gelöst und der zweite Zellhalterrahmen 20 abgenommen werden, so dass einzelne Rundzellen 200 zugänglich sind.

Ein weiterer wichtiger Aspekt der Erfindung liegt darin, dass die zylindrischen Rundzellen 200 an ausschließlich einer Seite elektrisch kontaktiert sind, und zwar auf der in dieser Darstellung oberen Seite im Bereich des ersten Zellhalterrahmens 10. Alle zylindrischen Rundzellen 200 sind mit gleicher Ausrichtung ihrer Polaritäten innerhalb der Batterie angeordnet. Beispielsweise sind alle zylindrischen Rundzellen so angeordnet, dass der Pluspol nach oben bzw. in die Richtung weist, auf der die Leiterplatte 300 aufgelegt ist. Die zylindrischen Rundzellen sind in dieser Ausführungsform so ausgebildet, dass der positive Pol an einem zentral angeordneten Pol-Pin auf der oberen Stirnseite der zylindrischen Rundzelle und der negative Pol an der Zellschulter abgegriffen werden.

In dieser Ausführungsform ist die elektrische Kontaktierung der zylindrischen Rundzellen 200 so ausgeführt sein, dass die Kontaktierung mit entsprechenden Anschlusskontakten direkt auf der Leiterplatte 300 mit Hilfe von kurzen Drähten (*wirebonds*) erfolgt. Die Drähte können insbesondere durch ein Ultraschall-Verschweißen (*Wirebonding*) mit dem jeweiligen Pol der zylindrischen Rundzelle und dem entsprechenden Anschlusskontakt der Leiterplatte 300 verbunden werden.

Die zylindrischen Rundzellen 200 sind mit dem zweiten Zellhalterrahmen 20 in lösbarer Weise verbunden, wobei die zylindrischen Rundzellen 200 in die entsprechenden Aufnahmen des zweiten Zellhalterrahmens 20 eingeklemmt sind. Hierdurch ist es möglich, dass nach dem Lösen der Schraubverbindungen 30 der zweite Zellhalterrahmen 20 vorsichtig abgehoben werden kann, wobei die zylindrischen Rundzellen 200 in dem Verbund mit dem ersten Zellhalterrahmen 10 verbleiben.

Weiterhin ist es in dieser Ausführungsform vorgesehen, dass die zylindrischen Rundzellen 200 ausschließlich im Bereich des ersten Zellhalterrahmens 10 verklebt sind, sodass eine stabile elektrische Kontaktierung in diesem ersten endständigen Bereich der zylindrischen Rundzellen 200 auch beispielsweise bei Erschütterungen oder Ähnlichem sichergestellt ist.

Die Schraubverbindungen 30 sind in dieser Ausführungsform an verschiedenen Stellen der Zellhalterrahmen 10, 20 vorgesehen. Insbesondere ist zwischen jeder der außenständigen zylindrischen Rundzellen 200 eine Schraubverbindung zwischen den Zellhalterrahmen 10, 20 vorgesehen.

In dieser Ausführungsform befinden sich alle Anschlusskontakte der Leiterplatte 300 auf derjenigen Flachseite der Leiterplatte 300, die den zylindrischen Rundzellen 200 abgewandt ist. Die hierfür verwendbaren Drähte zur Kontaktierung werden durch entsprechende Durchbrechungen in der Leiterplatte 300 hindurchgeführt.

Die Anschlusskontakte und die in der Leiterplatte 300 vorgesehenen, hier nicht sichtbaren Leiterbahnen sind so ausgebildet, dass die gewünschte Konfiguration bei der Verschaltung der zylindrischen Rundzellen 200 (P- und/oder S-Verschaltung) realisiert wird.

Weiterhin sind auf der Leiterplatte 300 vorzugsweise verschiedene elektronische Bauteile angeordnet, die das Batteriemanagementsystem der Batterie realisieren. Hierbei handelt es sich insbesondere um verschiedene Mess- und/oder Steuer- und/oder Schutzschaltungen, um einen oder mehrere Mikroprozessoren sowie gegebenenfalls um einen oder mehrere Spannungswandler.

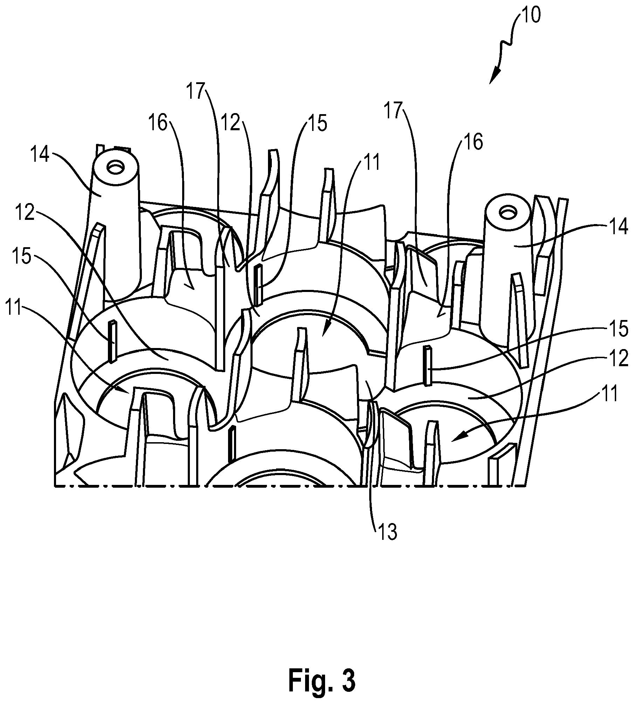

**Fig. 3** zeigt in isolierter Darstellung einen Abschnitt des oberen, ersten Zellhalterrahmens 10, der im Vergleich mit der Darstellung in Fig. 2 in dieser Darstellung umgedreht ist. Zu erkennen sind die einzelnen kreisförmigen bzw. teilkreisförmigen Aufnahmen 11 für die einzelnen zylindrischen Rundzellen, die mit ihrem jeweiligen ersten endständigen Bereich, also im Vergleich mit der Darstellung der Fig. 2 mit ihrer oberen Stirnseite, in diese Aufnahmen 11 eingesetzt werden. In diesem Bereich erfolgt auch eine Verklebung der zylindrischen Rundzellen mit dem Zellhalter 10.

Die jeweiligen Aufnahmen 11 werden von einem umlaufenden Steg 12 begrenzt. Der Steg 12 dient zur sicheren Halterung der zylindrischen Rundzellen. Im Bereich des Stegs 12 ist ein weiterer Ausschnitt 13 vorgesehen, der die Zugänglichkeit der Stirnseite der zylindrischen Rundzelle im Hinblick auf die elektrische Kontaktierung mit der Zellschulter und dem Pol-Pin erleichtert.

Weiterhin sind die im Bereich der Längsseiten des Zellhalterrahmens 10 verteilten Gewindehülsenkegel 14 in Form von säulenförmigen Verlängerungen zu erkennen, die für die Herstellung der Schraubverbindungen zwischen dem ersten und dem zweiten Zellhalterrahmen dienen.

Am Innenumfang der Aufnahmen 11 sind weiterhin mehrere Stege 15 vorgesehen, die für eine Zentrierung der einzusetzenden zylindrischen Rundzellen sorgen. Pro Aufnahme können beispielsweise drei Stege 15 vorgesehen sein, die über den Umfang der Aufnahme 11 gleichmäßig verteilt sind.

Zwischen den einzelnen Aufnahmen 11 sind abschüssige Flächen 16 als Leitelemente vorgesehen, die zum Verteilen des Klebstoffs dienen, der über den zweiten Zellhalterrahmen eingeleitet wird. Weiterhin sind zusätzliche Leitelemente 17 vorgesehen, die die Verteilung des Klebstoffs unterstützen. Diese zusätzlichen Leitelemente 17 sind in Form von über die Aufnahmen herausragende breite Stege ausgebildet.

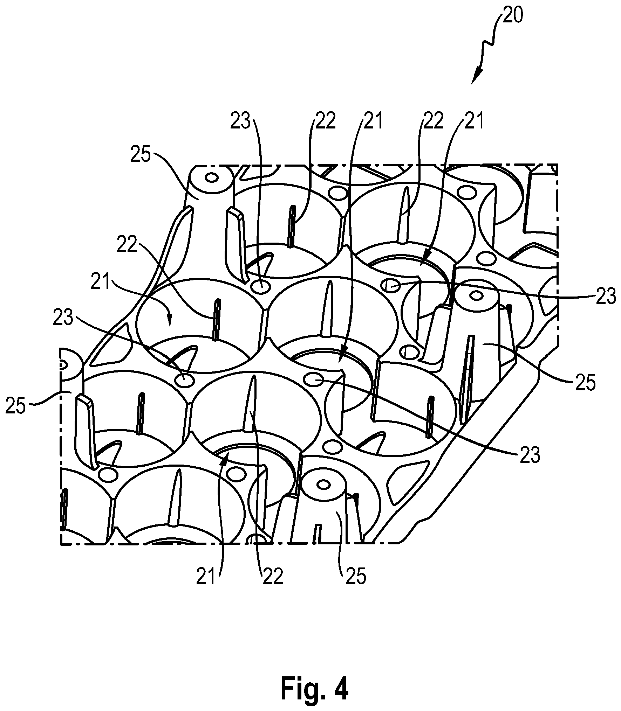

**Fig. 4** zeigt einen Abschnitt des unteren, also des zweiten Zellhalterrahmens 20. Auch hier sind Aufnahmen 21 für die einzusetzenden Energiespeicherelemente, also die zylindrischen Rundzellen, vorgesehen. Am inneren Umfang der Aufnahmen 21 sind Klemmrippen 22 vorgesehen. Es können beispielsweise jeweils drei Klemmrippen 22 pro Aufnahme 21 vorgesehen sein. Die Klemmrippen 22 sind vorzugsweise gleichmäßig über den Umfang der Aufnahmen 21 verteilt. In bevorzugten Ausführungsformen sind eine oder mehrere der Klemmrippen, gegebenenfalls auch alle Klemmrippen, aus einem elastischen Material, insbesondere einem thermoplastischen Elastomermaterial, gebildet. Vorzugsweise bestehen eine oder zwei der Klemmrippen aus dem thermoplastischen Elastomermaterial und die weiteren Klemmrippen bestehen aus einem anderen, weniger elastischen Kunststoff, beispielsweise dem gleichen Kunststoff, aus dem der Zellhalterrahmen 20 gebildet ist. Die Klemmrippe aus dem thermoplastischen Elastomermaterial drückt das Energiespeicherelement in Richtung der anderen Kunststoffrippen.

Korrespondierend zu den Gewindehülsenkegeln 14 des ersten Zellhalterrahmens 10 sind in dem zweiten Zellhalterrahmen 20 Schraubkanalkegel 25 als säulenförmige Verlängerungen an den Längsseiten des zweiten Zellhalterrahmens 20 verteilt.

Für eine Verklebung der zylindrischen Rundzellen im Bereich des ersten Zellhalterrahmens weist der zweite Zellhalterrahmen 20 Klebstoffdurchführungen 23 auf. Bei der Montage kann somit der flüssige Klebstoff über die Seite des zweiten Zellhalterrahmens 20 appliziert werden, nachdem die zylindrischen Rundzellen in die beiden Zellhalterrahmen eingesetzt und der Zellhalter über die Schraubverbindungen geschlossen wurde. Der Klebstoff gelangt über die Klebstoffdurchführungen 23 dann in den Bereich der Leitelemente 17 und 16 des ersten Zellhalterrahmens 10 und wird somit in den Bereich der Aufnahmen 11 des ersten Zellhalterrahmens geleitet, sodass die zylindrischen Rundzellen in diesem Bereich verklebt werden.

Diese erfindungsgemäße Batterie ist in besonderer Weise für einen Austausch einzelner Energiespeicherelemente bzw. einzelner, gegebenenfalls defekter zylindrischer Rundzellen 200 geeignet. Falls ein solcher Austausch erforderlich ist, wird zunächst das Gehäuse geöffnet und anschließend werden die Schraubverbindungen zwischen den beiden Zellhalterrahmen gelöst. Bevorzugt wird in einem vorhergehenden Schritt die Schweißverbindung der defekten Zelle zur Leiterplatte gelöst. Nun kann der zweite Zellhalterrahmen abgehoben werden, da die zylindrischen Rundzellen mit dem zweiten Zellhalterrahmen lediglich verklemmt, aber nicht verklebt sind. Die gegebenenfalls defekte zylindrische Rundzelle kann aus dem ersten Zellhalterrahmen herausgebrochen werden. Nach dem Herausnehmen der defekten Zelle kann nun eine intakte Zelle eingesetzt und durch Verklebung fixiert werden. Nach dem Aufsetzen des zweiten Zellhalterrahmens wird dieser wieder mit dem ersten Zellhalterrahmen verschraubt werden. Dann kann die Schweißverbindung zur Leiterplatte wieder hergestellt werden.

Die einseitige Verklebung der Energiespeicherelemente ausschließlich im Bereich des ersten Zellhalterrahmens erlaubt einen einfachen Zugang zu der gegebenenfalls defekten Zelle. Da der zweite Zellhalterrahmen zerstörungsfrei abgenommen werden kann, ist insgesamt keine Zerlegung der gesamten Batterie erforderlich, um ein einzelnes Energiespeicherelement auszutauschen.

## Patentansprüche

1. Batterie (100) mit einem Gehäuse (110, 120) und einer Mehrzahl darin angeordneter, wiederaufladbarer elektrochemischer Energiespeicherelemente (200) mit jeweils einem positiven Pol und einem negativen Pol mit den folgenden Merkmalen:
a. Die elektrochemischen Energiespeicherelemente (200) weisen jeweils eine Längsachse sowie einen ersten endständigen Bereich und einen zweiten endständigen Bereich auf, und
b. die elektrochemischen Energiespeicherelemente (200) sind mit paralleler Ausrichtung ihrer jeweiligen Längsachsen nebeneinander angeordnet, und
c. die Batterie (100) umfasst einen zweiteiligen Zellhalter mit einem ersten Zellhalterrahmen (10) und einem zweiten Zellhalterrahmen (20), und
d. der erste Zellhalterrahmen (10) fixiert die elektrochemischen Energiespeicherelemente (200) in deren ersten endständigen Bereichen und der zweite Zellhalterrahmen (20) fixiert die elektrochemischen Energiespeicherelemente in deren zweiten endständigen Bereichen,
**dadurch gekennzeichnet, dass**
e. alle positiven Pole und Pole der elektrochemischen Energiespeicherelemente (200) in deren ersten endständigen Bereichen mit mindestens einem weiteren Element (300) der Batterie elektrisch kontaktiert sind, und
f. der erste Zellhalterrahmen (10) und der zweite Zellhalterrahmen (20) lösbar miteinander verbunden sind.

2. Batterie nach Anspruch 1 mit dem folgenden zusätzlichen Merkmal:
a. Der erste Zellhalterrahmen (10) und der zweite Zellhalterrahmen (20) sind durch Schraubverbindungen (30) lösbar miteinander verbunden.

3. Batterie nach Anspruch 1 oder Anspruch 2 mit mindestens einem der folgenden zusätzlichen Merkmale:
a. Die elektrochemischen Energiespeicherelemente (200) sind in dem zweiten Zellhalterrahmen (20) lösbar fixiert, insbesondere eingeklemmt,
b. der zweite Zellhalterrahmen (20) weist zur lösbaren Fixierung der elektrochemischen Energiespeicherelemente Klemmelemente (22), insbesondere Klemmrippen, auf.

4. Batterie nach einem der vorhergehenden Ansprüche mit dem folgenden zusätzlichen Merkmal:
a. Die elektrochemischen Energiespeicherelemente (200) sind in dem ersten Zellhalterrahmen (10) durch Verklebung fixiert.

5. Batterie nach einem der vorhergehenden Ansprüche mit dem folgenden zusätzlichen Merkmal:
a. Der erste Zellhalterrahmen (10) weist Stege (15) zur Zentrierung der elektrochemischen Energiespeicherelemente (200) auf.

6. Batterie nach einem der vorhergehenden Ansprüche mit mindestens einem der folgenden zusätzlichen Merkmale:
a. Der erste Zellhalterrahmen (10) weist Leitelemente (16, 17) zur Verteilung von Klebstoff auf,
b. der zweite Zellhalterrahmen (20) weist Durchführungsöffnungen (23) für Klebstoff auf.

7. Batterie nach einem der vorhergehenden Ansprüche mit mindestens einem der folgenden zusätzlichen Merkmale:
a. Die elektrochemischen Energiespeicherelemente (200) sind zylindrische Rundzellen,
b. alle elektrochemischen Energiespeicherelemente (200) sind mit gleicher Ausrichtung ihrer Polaritäten nebeneinander angeordnet,
c. die elektrische Kontaktierung der elektrochemischen Energiespeicherelemente (200) erfolgt über einen Pol-Pin und eine Zellschulter, die sich in dem ersten endständigen Bereich der elektrochemischen Energiespeicherelemente befinden.

8. Batterie nach einem der vorhergehenden Ansprüche mit mindesten einem der folgenden zusätzlichen Merkmale:
a. Die Batterie (100) umfasst als weiteres Element eine Leiterplatte (300),
b. die Leiterplatte (300) weist für jedes der elektrochemischen Energiespeicherelemente zwei Anschlusskontakte auf,
c. die positiven und die negativen Pole der elektrochemischen Energiespeicherelemente (200) sind über elektrische Leiter mit den Anschlusskontakten der Leiterplatte (300) verbunden,
d. die elektrischen Leiter sind Drähte,
e. die Verbindung der positiven und der negativen Pole mit den Anschlusskontakten der Leiterplatte (300) basiert auf einem Ultraschall-Verschweißen.

9. Batterie nach Anspruch 8 mit mindestens einem der folgenden zusätzlichen Merkmale:
a. Die Leiterplatte (300) weist Durchbrechungen auf, durch die elektrische Leiter, welche zur elektrischen Kontaktierung der positiven und negativen Pole vorgesehen sind, geführt sind,
b. je zwei mit einem elektrochemischen Energiespeicherelement (200) verbundene elektrische Leiter sind durch eine Durchbrechung geführt,
c. die Durchbrechungen weisen eine Fläche in einem Bereich von 25 mm² bis 100 mm² auf,

10. Batterie nach einem der vorhergehenden Ansprüche mit mindestens einem der folgenden zusätzlichen Merkmale:
a. Die Batterie (100) ist ein Wechsel-Akkumulator,
b. die Batterie (100) ist ein Akkumulator für ein elektrisches Fahrzeug,
c. die Batterie (100) ist ein Akkumulator für ein elektrisches Fahrrad.

11. Zellhalter für eine Batterie (100) mit einem Gehäuse und einer Mehrzahl darin angeordneter, wiederaufladbarer elektrochemischer Energiespeicherelemente (200) gemäß einem der vorhergehenden Ansprüche mit den folgenden Merkmalen:
a. Der Zellhalter ist zweiteilig und umfasst einen ersten Zellhalterrahmen (10) und einen zweiten Zellhalterrahmen (20), und
b. der erste Zellhalterrahmen (10) ist zur Fixierung der elektrochemischen Energiespeicherelemente in deren erstem endständigen Bereich und der zweite Zellhalterrahmen (20) ist zur Fixierung der elektrochemischen Energiespeicherelemente in deren zweitem endständigen Bereich vorgesehen, und
c. der erste Zellhalterrahmen (10) und der zweite Zellhalterrahmen (20) sind zur lösbaren Verbindung miteinander vorgesehen.

12. Zellhalter nach Anspruch 11 mit dem folgenden zusätzlichen Merkmal:
a. Der erste Zellhalterrahmen (10) und der zweite Zellhalterrahmen (20) sind durch Schraubverbindungen (30) lösbar miteinander verbunden.

13. Zellhalter nach Anspruch 11 oder Anspruch 12 mit dem folgenden zusätzlichen Merkmal:
a. Der zweite Zellhalterrahmen (20) weist zur lösbaren Fixierung der elektrochemischen Energiespeicherelemente Klemmelemente (22), insbesondere Klemmrippen, auf.

14. Zellhalter nach einem der Ansprüche 11 bis 13 mit dem folgenden zusätzlichen Merkmal:
a. Der erste Zellhalterrahmen (10) weist Stege (15) zur Zentrierung der elektrochemischen Energiespeicherelemente (200) auf.

15. Zellhalter nach einem der Ansprüche 11 bis 14 mit mindestens einem der folgenden zusätzlichen Merkmale:
a. Der erste Zellhalterrahmen (10) weist Leitelemente (16, 17) zur Verteilung von Klebstoff auf,
b. der zweite Zellhalterrahmen (20) weist Durchführungsöffnungen (23) für Klebstoff auf.
